# EUROPEAN PATENT APPLICATION

(11) **EP 4 729 345 A1**
(43) Date of publication of application: **22.04.2026**
(21) Application number: 24851031.5
(22) Date of filing: 07.08.2024
(51) Int. Cl.: B60L 53/62, H02J 7/00

(54) **POWER ADJUSTMENT METHOD AND SYSTEM BASED ON CHARGING PILES, AND ELECTRONIC DEVICE AND STORAGE MEDIUM**

(30) Priority: 10.08.2023 CN 202311009970
(71) Applicant: Autel Digital Power Co., Ltd., Shenzhen, Guangdong 518000 (CN)
(72) Inventor: LIANG, Lina, Shenzhen, Guangdong 518000 (CN); ZHANG, Yuqin, Shenzhen, Guangdong 518000 (CN); ZHANG, Jinlei, Shenzhen, Guangdong 518000 (CN); WU, Chao, Shenzhen, Guangdong 518000 (CN)
(74) Representative: Harris, Oliver John Richard
(86) International application number: PCT/CN2024/110343
(87) International publication number: WO 2025/031386

(57) **Abstract**

Disclosed in the present invention are a power adjustment method and system based on charging piles, and an electronic device and a storage medium. The method includes: firstly, determining a priority identifier of a target charging gun, where a target charging pile includes multiple charging guns including the target charging gun; secondly, on the basis of the priority identifier, determining an issued power of the target charging gun; then, acquiring a reported power of the target charging gun; and finally, on the basis of the issued power and the reported power, controlling the target charging pile to execute a power release operation or a power recovery operation on the target charging gun. Therefore, a real-time dynamic adjustment of the power of the target charging gun is realized. By combining the priority identifier with real-time monitoring of the charging guns, while the issued power of the target charging gun is determined according to the priority identifier, power release or power recovery is performed in response to the target charging gun which is monitored to be abnormal, thereby improving the overall charging efficiency and stability of the target charging pile.

## Description

### CROSS-REFERENCE TO RELATED APPLICATIONS

The present invention claims the priority of the Chinese patent invention filed with the China Patent Office on August 10, 2023, with the present invention number 202311009970.3 and the present invention name "POWER ADJUSTMENT METHOD AND SYSTEM BASED ON CHARGING PILES, AND ELECTRONIC DEVICE AND STORAGE MEDIUM", which is incorporated herein by reference in its entirety.

### TECHNICAL FIELD

The present invention relates to the technical field of charging, and in particular to a power adjustment method and system based on charging piles, and an electronic device and a storage medium.

### BACKGROUND

With the explosive growth of electric devices such as new energy electric vehicles, the demand for charging devices such as charging piles has also increased accordingly. A static allocation strategy is used for current intelligent scheduling of charging pile power, which only triggers power reallocation when a new vehicle owner joins charging or a vehicle owner completes charging.

However, during the charging process where the usage environment of the charging pile does not change, there will be a certain deviation between the actual power required by the vehicle for charging and the actual issued power by the charging pile, and the traditional static allocation strategy is difficult to solve the problem of calibrating power deviation, leading to power overload or power redundancy of the charging pile.

### SUMMARY

The present invention provides a power adjustment method and system based on charging piles, and an electronic device and a storage medium to solve the problem in the prior art that the static allocation strategy cannot solve the calibration of power deviation, leading to power overload or power redundancy of the charging pile.

An embodiment of the present invention provides a power adjustment method based on charging piles, which includes:
determining a priority identifier of a target charging gun, where a target charging pile includes multiple charging guns including the target charging gun;
on the basis of the priority identifier, determining an issued power of the target charging gun;
acquiring a reported power of the target charging gun; and
on the basis of the issued power and the reported power, controlling the target charging pile to execute a power release operation or a power recovery operation on the target charging gun.

Optionally, the on the basis of the issued power and the reported power, controlling the target charging pile to execute a power release operation or a power recovery operation on the target charging gun includes:
judging whether the issued power is greater than the reported power;
if greater than, controlling the target charging pile to perform the power release operation on the target charging gun; and
if less than, controlling the target charging pile to perform the power recovery operation on the target charging gun.

Optionally, the controlling the target charging pile to perform a power release operation on the target charging gun includes:
calculating a releasable power value of the target charging gun according to the issued power and the reported power;
determining a charging gun in a to-be-received state in the target charging pile as a to-be-allocated charging gun; and
allocating power to the to-be-allocated charging gun according to the releasable power value.

Optionally, the determining a charging gun in a to-be-received state in the target charging pile as a to-be-allocated charging gun includes:
acquiring the issued power and the power upper limit value of the charging gun in the target charging pile;
judging whether the issued power is less than the power upper limit value; and
when the issued power is less than the power upper limit value, determining the charging gun as the to-be-allocated charging gun.

Optionally, the determining a charging gun in a to-be-received state in the target charging pile as a to-be-allocated charging gun includes:
acquiring the issued power and the reported power of the charging gun in the target charging pile;
judging whether a difference between the issued power and the reported power is less than a preset threshold; and
when the difference between the issued power and the reported power is less than the preset threshold, determining the charging gun as the to-be-allocated charging gun.

Optionally, the allocating power to the to-be-allocated charging gun according to the releasable power value includes:
determining the issued power and the power upper limit value of the to-be-allocated charging gun;
determining a maximum receivable value of the to-be-allocated charging gun according to the issued power or the power upper limit value; and
allocating power to the to-be-allocated charging gun according to the maximum receivable value and the releasable power value.

Optionally, the allocating power to the to-be-allocated charging gun according to the maximum receivable value and the releasable power value includes:
judging whether the maximum receivable value is less than the releasable power value;
if less than, increasing the issued power of the to-be-allocated charging gun according to the maximum receivable value; and
if greater than or equal to, increasing the issued power of the to-be-allocated charging gun according to the releasable power value.

Optionally, after increasing the issued power of the to-be-allocated charging gun according to the maximum receivable value, the method further includes:
recalculating the releasable power value of the target charging gun according to the maximum receivable value and the releasable power value; and
allocating power to a first to-be-allocated charging gun according to the recalculated releasable power value, where the first to-be-allocated charging gun is the charging gun among the to-be-allocated charging guns that has not been allocated power yet.

Optionally, after allocating power to the to-be-allocated charging gun according to the releasable power value, the method further includes:
judging whether there is the releasable power value in the target charging pile;
when there is the releasable power value in the target charging pile, determining a group including the target charging pile as a target group;
determining the charging pile in the to-be-received state in the target group as the to-be-allocated charging pile; and
allocating power to the to-be-allocated charging pile according to the releasable power value.

Optionally, after allocating power to the to-be-allocated charging pile according to the releasable power value, the method further includes:
judging whether there is the releasable power value in the target group;
when there is the releasable power value in the target group, determining other groups in the to-be-received state as to-be-allocated groups; and
allocating power to the to-be-allocated groups according to the releasable power value.

Optionally, the controlling the target charging pile to perform a power recovery operation on the target charging gun includes:
calculating a receivable power value of the target charging gun according to the issued power and the reported power;
determining a charging gun in a to-be-recovered state in the target charging pile as a to-be-recovered charging gun; and
recovering power for the to-be-recovered charging gun according to the receivable power value.

Optionally, the determining a charging gun in a to-be-recovered state in the target charging pile as a to-be-recovered charging gun includes:
acquiring the issued power and a minimum reserved power value of the charging gun in the target charging pile;
judging whether the issued power is greater than the minimum reserved power value; and
when the issued power is greater than the minimum reserved power value, determining the charging gun as the to-be-recovered charging gun.

Optionally, the determining a charging gun in a to-be-received state in the target charging pile as a to-be-allocated charging gun includes:
acquiring the issued power and the reported power of the charging gun in the target charging pile;
judging whether a difference between the issued power and the reported power is greater than a preset threshold; and
when the difference between the issued power and the reported power is greater than the preset threshold, determining the charging gun as the to-be-recovered charging gun.

Optionally, the recovering power for the to-be-recovered charging gun according to the receivable power value includes:
determining the priority identifier of the to-be-recovered charging gun;
determining a power recovery sequence according to the priority identifier; and
recovering power for each of the to-be-recovered charging guns in sequence according to the power recovery sequence.

Optionally, the recovering power for each of the to-be-recovered charging guns in sequence according to the power recovery sequence includes:
determining the issued power and the minimum reserved power value of the to-be-recovered charging gun;
determining a maximum recoverable value of the to-be-recovered charging gun according to the issued power and the minimum reserved power value; and
recovering power for the to-be-recovered charging gun according to the maximum recoverable value or the receivable power value.

Optionally, the recovering power for the to-be-recovered charging gun according to the maximum recoverable value or the receivable power value includes:
judging whether the maximum recoverable value is greater than the receivable power value;
if greater than or equal to, reducing the issued power of the to-be-recovered charging gun according to the receivable power value; and
if less than, reducing the issued power of the to-be-recovered charging gun according to the maximum recoverable value.

Optionally, after reducing the issued power of the to-be-recovered charging gun according to the maximum recoverable value, the method further includes:
recalculating the receivable power value of the target charging gun according to the maximum recoverable value and the receivable power value; and
recovering power for a first to-be-recovered charging gun according to the recalculated receivable power value, where the first to-be-recovered charging gun is the charging gun in the to-be-recovered charging guns that has not been recovered power yet.

Optionally, after allocating power to the to-be-recovered charging gun according to the receivable power value, the method further includes:
judging whether there is the receivable power value in the target charging pile;
when there is the receivable power value in the target charging pile, determining a group including the target charging pile as a target group;
determining a charging pile in a to-be-recovered state in the target group as a to-be-recovered charging pile; and
recovering power for the to-be-recovered charging pile according to the receivable power value.

Optionally, after recovering power for the to-be-recovered charging pile according to the receivable power value, the method further includes:
judging whether there is the receivable power value in the target group;
when there is the receivable power value in the target group, determining other groups in the to-be-recovered state as to-be-recovered groups; and
recovering power for the to-be-recovered groups according to the receivable power value.

Optionally, before determining a priority identifier of a target charging gun, the method further includes:
acquiring user information corresponding to the target charging gun, where the user information includes a user type; and
generating the priority identifier for the target charging gun according to the user information.

Optionally, before determining a priority identifier of a target charging gun, the method further includes:
acquiring user information corresponding to the target charging gun, where the user information includes a scheduled charging time of a user:
acquiring an estimated charging time of the target charging gun; and
generating the priority identifier for the target charging gun according to the scheduled charging time and the estimated charging time.

Optionally, the on the basis of the priority identifier, determining an issued power of the target charging gun specifically includes:
determining the priority identifier of the charging gun in the target charging pile;
determining the issued power upper limit value of all the charging guns of the target charging pile according to the priority identifier; and
determining the issued power of the target charging gun according to the issued power upper limit values of all the charging guns based on a power allocation algorithm.

Optionally, the determining the issued power upper limit value of all the charging guns of the target charging pile according to the priority identifier includes:
determining the number of charging guns corresponding to each priority identifier;
sorting the charging guns according to the priority identifier to obtain a power allocation sequence; and
sequentially determining the issued power upper limit value of each charging gun according to the power allocation sequence and the priority identifier.

An embodiment of the present invention provides an electronic device including a memory, a processor and a computer program stored in the memory and capable of running on the processor, where the processor, when executing the computer program, implements a method as described in the first aspect.

An embodiment of the present invention provides a storage medium, where the storage medium stores a computer program, and the computer program implements the method according to the first aspect when executed by a processor.

An embodiment of the present invention provides a power adjustment system based on charging piles, including a charging management device and a charging station, where the charging station includes at least one charging group, each charging group includes at least two charging piles, the charging management device is communicatively connected to the charging station, and the charging management device is configured to execute the method according to the first aspect.

According to the power adjustment method of the embodiment of the present invention, the priority identifier of a target charging gun is first determined, where the target charging pile includes a plurality of charging guns including the target charging gun; second, the issued power of the target charging gun is determined according to the priority identifier; then the reported power of the target charging gun is acquired; and the target charging pile is finally controlled to perform a power release operation or a power recovery operation on the target charging gun according to the issued power and the reported power. Therefore, a real-time dynamic adjustment of the power of the target charging gun is realized. By combining the priority identifier with real-time monitoring of the charging guns, while the issued power of the target charging gun is determined according to the priority identifier, power release or power recovery is performed in response to the target charging gun which is monitored to be abnormal, thereby allowing the target charging gun to operate normally while improving the overall charging efficiency and stability of the target charging pile.

### BRIEF DESCRIPTION OF THE DRAWINGS

One or more embodiments are illustrated by way of example with the corresponding figures in the accompanying drawings. These illustrative descriptions do not constitute a limitation on the embodiments. Elements with the same reference numerals in the drawings denote similar elements. Unless otherwise specified, the figures in the drawings do not constitute a limitation on scale.
FIG. 1 is a schematic diagram of an invention environment of a power adjustment system based on charging piles according to an embodiment of the present invention;
FIG. 2 is a schematic flowchart of a power adjustment method based on charging piles according to an embodiment of the present invention;
FIG. 3 is a schematic flowchart of performing a power release operation or a power recovery operation on a target charging gun according to an embodiment of the present invention;
FIG. 4 is a schematic flowchart of determining an issued power of a target charging gun according to a priority identifier according to an embodiment of the present invention; and
FIG. 5 is a schematic diagram of an architecture of a computer device according to an embodiment of the present invention.

### DETAILED DESCRIPTION OF THE PRESENT INVENTION

The technical solutions in the embodiments of the present invention will be clearly and completely described below with reference to the accompanying drawings in the embodiments of the present invention. Obviously, the described embodiments are part of the embodiments of the present invention, rather than all the embodiments. Based on the embodiments in the present invention, all other embodiments obtained by a person skilled in the art without creative work shall fall within the protection scope of the present invention.

First, to introduce the method of the present invention, some key terms involved in the following are defined.

Issued power: a theoretical charging power value set for a charging gun to provide to a charged device.

Reported power: an actual charging power value detected for a charging gun to provide to a charged device.

Power upper limit value: the maximum power value that a charging gun has in a normal working state, when an actual charging power value of a charging gun is greater than a power upper limit value, the charging gun is more likely to be damaged compared to a normal working state.

Minimum reserved power value: the minimum power value that a charging gun has in a normal working state, when an actual charging power value of a charging gun is less than the minimum reserved power value, the charging gun cannot start charging.

Below is an introduction to the present invention environment of the methods provided in the embodiments of the present invention.

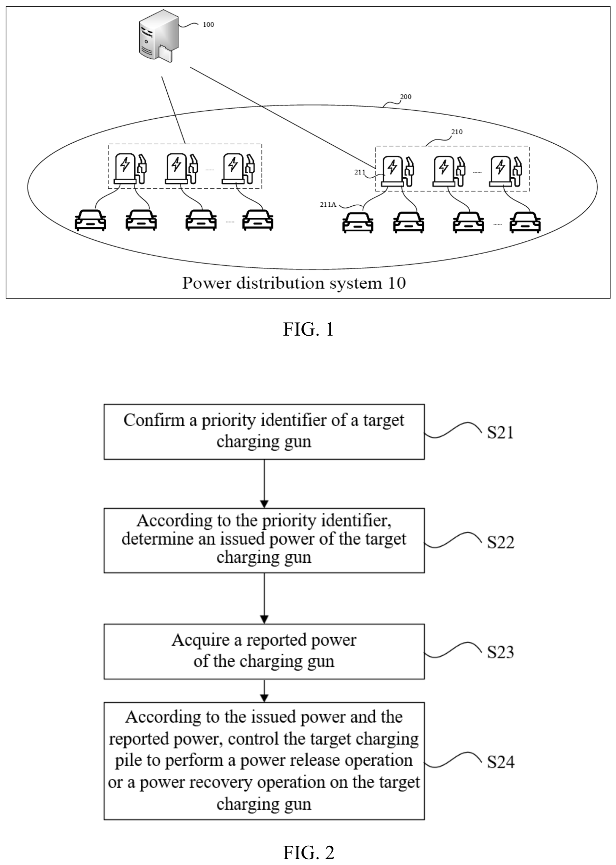

The method provided by the embodiment of the present invention can be applied to the power adjustment system based on charging piles as shown in FIG. 1. The power adjustment system 10 includes a charging management device 100 and a charging station 200. The charging station 200 includes at least one charging group 210. One charging group 210 includes at least two charging piles 211. Each charging pile 211 includes a plurality of charging guns 211A. Each charging gun 211A can match one user at the same time to charge the user's device, such as a new energy electric vehicle.

The charging management device 100 is communicatively connected to the charging station 200 for managing the charging station 200. The charging management device 100 may be composed of one or more workstations or servers, and implement monitoring, data collection, and query of the charging piles 211 and the charging guns 211A, as well as data processing and analysis of the entire charging station 200, etc. The charging management device 100 can acquire data including equipment information of devices being charged in the charging station 200, charging information of the charging pile 211 including the charging gun 211A, and user information corresponding to the charging device.

In one of the embodiments, the charging station 200 is a facility that provides charging services for electric vehicles in cities, highways, or industrial areas. The charging station 200 includes two charging groups 210, which are respectively the first charging group and the second charging group. The allocation of the charging group 210 may be completed by the charging management device 100; for example, the charging management device 100 may divide the charging pile 211 using the same power supply point into one charging group 210.

Each charging group 210 may include at least two charging piles 211; for example, the first charging group 210 includes three charging piles 211, which are respectively the first charging pile, the second charging pile and the third charging pile. Each charging pile further includes a plurality of charging guns 211A; for example, the first charging pile includes four charging guns 211A, which are respectively the first charging gun, the second charging gun, the third charging gun and the fourth charging gun. The charging gun 211A is used to electrically connect the electric vehicle to be charged with the charging pile 211, so that the charging pile 211 provides power for the electric vehicle to charge through the charging gun 211A.

The charging pile 211 and the charging gun 211A can provide charging outputs with different powers, which is specifically controlled by the charging management device 100 over the issued power of the charging pile 211 and the charging gun 211A to realize power adjustment for the electric vehicle.

It is understandable that the composition of the charging station and charging management device shown in the above FIG. 1 is merely an example. In actual situations, equipment or modules may be integrated, adjusted, or added as needed. For example, the charging station may further include a power supply system, which mainly provides power for charging equipment and may consist of primary equipment (switches, transformers, lines, etc.), secondary equipment (including detection, protection, and control devices, etc.), source filtering devices, etc., which is not limited by the present invention.

Based on the above power adjustment system, the power adjustment method based on the charging piles provided in the present invention can be implemented.

Please refer to FIG. 2, FIG. 2 is a schematic flowchart of a charging power distribution method provided by an embodiment of the present invention; the power adjustment method shown in FIG. 2 may be executed by the charging management device, and the method may include:
S21 Determine a priority identifier of a target charging gun.

The target charging pile includes multiple charging guns including the target charging gun, each charging gun has one corresponding priority identifier, and the priority identifier is used to determine the position of the corresponding charging gun in the adjustment sequence when adjusting power.

In one embodiment, the priority identifier includes 4 levels, corresponding to 4 different user types respectively, which are users with paused charging, users with priority charging, VIP users, and regular users. That is, four different types of users have different priority identifiers, and have different sequences when allocating and adjusting charging power, and the specific sequence will be described in detail later.

It should be noted that the priority identifiers include levels which are not limited to the 4 levels in the embodiments; more levels may also be provided to correspond to other user types, such as VVIP users or whitelisted customers, which is not limited herein.

It should also be noted that the priority identifier is adjustable; when the user information corresponding to the target charging gun or the charging status changes, the priority identifier is also adjusted accordingly, and thus it is necessary to re-determine the priority identifier of the target charging gun.

S22 According to the priority identifier, determine an issued power of the target charging gun.

The target charging pile has a power upper limit, and the target charging pile cannot support all the charging guns included in the charging pile to output at maximum power due to its power upper limit; thus, it is necessary to allocate the issued power for each charging gun of the charging pile. Since the priority identifiers assigned to respective charging guns are different, the issued power of all charging guns including the target charging gun can be determined based on the difference in priority identifiers.

In one embodiment, the target charging pile includes 4 charging guns, each charging gun has a maximum power of 10 kw, the target charging pile has a power upper limit of 20 kw, then it cannot satisfy that all 4 charging guns charge at the maximum power of 10 kw. At this time, according to the priority identifier, the issued power of one of the charging guns is allocated to 0 kw, the issued power of one charging gun is allocated to 10 kw, the issued power of one charging gun is allocated to 2 kw, and the issued power of the remaining one charging gun is allocated to 8 kw.

In the present embodiment, the target charging gun may be any one of the 4 charging guns, thereby realizing determining the issued power of the target charging gun according to the priority identifier.

S23 Acquire a reported power of the target charging gun.

After the charging gun determines the issued power, it then charges the charging device according to the issued power. The charging gun synchronously collects and obtains its reported power while outputting charging.

In fact, due to the difference between actual working conditions and theoretical states, the reported power is not strictly equal to the issued power; as long as the deviation between the two is within a certain fluctuation range, it is acceptable, that is, the charging gun is deemed to be in a normal working state. However, if the actual charging power of the charging gun deviates significantly from the set issued power, it is indicated that there is an abnormality in the operation of the charging gun, and it is necessary to adjust the power or shut down for maintenance; and only by real-time detection to acquire the reported power and by comparing the reported power with the issued power can the detection of the working status of the target charging gun be achieved.

In one embodiment, the issued power allocated by the charging pile to the target charging gun is 10 kw, the reported power detected by the charging gun is 9 kw, the deviation between the two is 1 kw, this deviation value is within the acceptable fluctuation range, thus, it can be determined that the charging gun is working normally, and there is no need to adjust the power temporarily.

In another embodiment, the issued power allocated by the charging pile to the target charging gun is 10 kw, the reported power detected by the charging gun is 6 kw, the deviation between the two is 4 kw, which has far exceeded the acceptable fluctuation range, and it is necessary to perform step S24 on the charging gun to adjust the power.

It should be noted that the detection of reported power is performed in real time, or sampling can be performed at time intervals, and a person skilled in the art can select according to actual conditions. Regardless of the detection method used, the obtained reported power corresponds to the issued power used for comparison, that is, the time for comparing the obtained reported power should not be earlier than the time when the issued power is adjusted.

S24 According to the issued power and the reported power, control the target charging pile to perform a power release operation or a power recovery operation on the target charging gun.

Specifically, after determining that the target charging gun requires power adjustment, it is necessary to judge a fault type of the target charging gun based on the comparison between the issued power and the reported power, and then perform the corresponding power adjustment operation according to the fault type of the target charging gun, where the power adjustment operation is one of a power release operation and a power recovery operation.

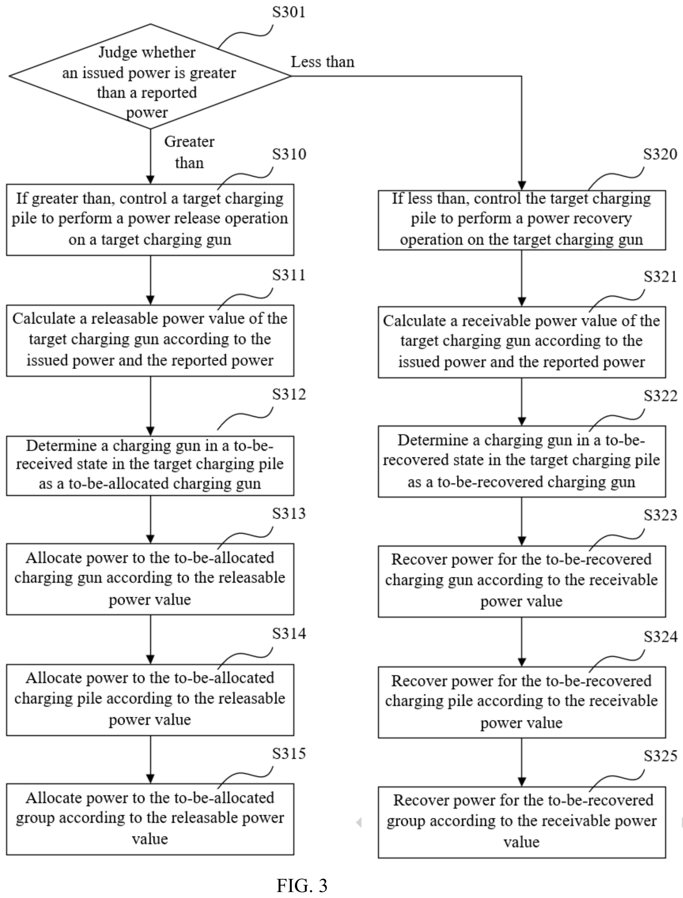

Please refer to FIG. 3, FIG. 3 is a schematic flowchart of performing a power release operation or a power recovery operation on a target charging gun according to an embodiment of the present invention, and the method includes the following steps:
S301 Judge whether an issued power is greater than a reported power.

When the issued power of the target charging gun is greater than the reported power, it is indicated that the target charging gun belongs to the type with abnormally high issued power, and the following step S310 is executed. When the issued power of the target charging gun is less than the reported power, it is indicated that the target charging gun is of the type where the issued power is abnormally low, and the following step S320 is executed.

S310 If greater than, control a target charging pile to perform a power release operation on a target charging gun. Specifically, step S310 specifically includes:
S311 Calculate a releasable power value of the target charging gun according to the issued power and the reported power.

The purpose of performing a power release operation on the target charging gun is to put the target charging gun in a normal working state, specifically, the final reported power of the target charging gun is the same as the adjusted issued power, or the deviation between the two is within an acceptable fluctuation range.

It can thus be determined that, in order to reduce the issued power value to the reported power value, the releasable power value of the target charging gun is the result of the issued power value minus the reported power value, i.e., releasable power value = issued power value - reported power value.

In one embodiment, the issued power value is 10 kw, the reported power value is 6 kw, and then the calculated releasable power value is 4 kw.

S312 Determine a charging gun in a to-be-received state in the target charging pile as a to-be-allocated charging gun.

When the power of the target charging gun decreases, it is indicated that the target charging pile has additional power redundancy, which can be allocated to other charging guns, thereby improving the overall charging efficiency of the target charging pile, and thus, it is necessary to determine whether the charging guns in the target charging pile other than the target charging gun can receive the releasable power value.

Specifically, in one embodiment, S312 includes the following steps:
S3121 Acquire the issued power and the power upper limit value of the charging gun in the target charging pile.
S3122 Judge whether the issued power is less than the power upper limit value.

When the issued power is less than the power upper limit value, proceed to the following step S3123. When the issued power is greater than or equal to the power upper limit value, then proceed to the following step S3124.

S3123 When the issued power is less than the power upper limit value, determine the charging gun as a to-be-allocated charging gun.

When the issued power is less than the power upper limit value, it is indicated that the charging gun is not working at full load, thus it can be determined that the charging gun is a to-be-allocated charging gun to increase the issued power of the charging gun and improve charging efficiency.

S3124 When the issued power is greater than or equal to the power upper limit value, determine that the charging gun is not the to-be-allocated charging gun.

When the issued power is greater than or equal to the power upper limit value, it is indicated that the charging gun is already working at full load or even overload. If the issued power of the charging gun continues to be increased, it may easily cause damage to the charging gun or other safety accidents; therefore, it is necessary to confirm that the charging gun is not the to-be-allocated charging gun.

In another embodiment, S312 includes the following steps:
S3125 Acquire the issued power and the reported power of the charging gun in the target charging pile.
S3126 Judge whether a difference between the issued power and the reported power is less than a preset threshold.

When the difference between the issued power and the reported power is less than a preset threshold, proceed to the following step S3127; when the difference between the issued power and the reported power is greater than the preset threshold, proceed to the following step S3128.

S3127 When the difference between the issued power and the reported power is less than the preset threshold, determine the charging gun as the to-be-allocated charging gun.

When the difference between the issued power and the reported power is less than a preset threshold, it is indicated that the charging gun is in a normal working state, its power can be adjusted, and thus determining that the charging gun is the to-be-allocated charging gun.

S3128 When the difference between the issued power and the reported power is greater than or equal to the preset threshold, determine that the charging gun is not the to-be-allocated charging gun.

When the difference between the issued power and the reported power is greater than or equal to the preset threshold, it is indicated that this charging gun also belongs to the type with abnormally high issued power, and it is necessary to perform a power release operation on it, rather than allowing this charging gun to receive additional power from another target charging gun with abnormally high issued power; therefore, it is determined that this charging gun is not a to-be-allocated charging gun.

It should be noted that the methods for determining the to-be-allocated charging gun in the above two embodiments can be used alone or in combination with each other, and a person skilled in the art can adaptively adjust them as needed.

S313 Allocate power to the to-be-allocated charging gun according to the releasable power value.

Specifically, in one embodiment, S313 includes the following steps:
S3131 Determine the issued power and the power upper limit value of the to-be-allocated charging gun.
S3132 Determine a maximum receivable value of the to-be-allocated charging gun according to the issued power and the power upper limit value.

The maximum issued power of the to-be-allocated charging gun during normal operation is the power upper limit value, which is the maximum issued power of the to-be-allocated charging gun after increasing power; thus, it can be determined that the maximum receivable value of the to-be-allocated charging gun is the result of subtracting the issued power value from the power upper limit value, i.e., maximum receivable value = power upper limit value - issued power value.

S3133 According to the maximum receivable value or the releasable power value, allocate power to the to-be-allocated charging gun.

Since both the maximum receivable value and the releasable power value play a restrictive role in the allocated power, that is, the increased power allocated to the to-be-allocated charging gun cannot exceed the maximum receivable value to avoid safety accidents caused by damage to the charging gun, and meanwhile, the increased allocated power also cannot exceed the releasable power value to avoid the target charging gun not having sufficient redundant power to release, resulting in overload of the target charging pile.

Specifically, to solve the above problem, S3133 further includes the following steps:
S31331 Judge whether the maximum receivable value is less than the releasable power value.
S31332 If greater than or equal to, increasing the issued power of the to-be-allocated charging gun according to the releasable power value.

When the maximum receivable value is greater than or equal to the releasable power value, it is indicated that the to-be-allocated charging gun is sufficient to fully receive the releasable power value of the target charging gun; in this case, the issued power is increased for the to-be-allocated charging gun with the releasable power value, and the issued power of the target charging gun is reduced to reach the reported power value.

S31333 If less than, increase the issued power of the to-be-allocated charging gun according to the maximum receivable value.

When the maximum receivable value is less than the releasable power value, it is indicated that even if the to-be-allocated charging gun is increased to the power upper limit value, it cannot fully receive the releasable power value of the target charging gun. At this time, the issued power for the to-be-allocated charging gun is increased based on the maximum receivable value, and the issued power of the to-be-allocated charging gun is increased to reach the power upper limit value.

S31334 Recalculate the releasable power value of the target charging gun according to the maximum receivable value and the releasable power value.

When increasing the issued power for the to-be-allocated charging gun according to the maximum receivable value, this indicates that the to-be-allocated charging gun cannot fully receive the releasable power value of the target charging gun; therefore, it is necessary to allocate power to another to-be-allocated charging gun, and thus it is necessary to recalculate the releasable power value of the target charging gun.

Specifically, the releasable power value of the target charging gun at this time is the original releasable power value minus the maximum receivable value of the allocated to-be-allocated charging gun, that is, recalculated releasable power value = original releasable power value - maximum receivable value.

Specifically, in the embodiment, the first to-be-allocated charging gun is referred to as the charging gun among the to-be-allocated charging guns that has not yet been allocated power, and the second to-be-allocated charging gun is referred to as the charging gun among the to-be-allocated charging guns that has already been allocated power. The original releasable power value of the target charging gun is 4 kw, and the maximum received power value of the second to-be-allocated charging gun is 1 kw, so the recalculated releasable power value is 3 kw. For the first to-be-allocated charging gun, the recalculated 3 kw is used as the releasable power value for subsequent calculations and judgments.

It should be noted that there may be multiple first to-be-allocated charging guns, and the specific number is not limited. For example, in the present embodiment, the maximum receiving power values of the two first to-be-allocated charging guns are respectively 2 kw and 1 kw, and the recalculated releasable power value is 1 kw.

S31335 According to the recalculated releasable power value, allocate power to the first to-be-allocated charging gun.

Specifically, in this step, it is necessary to judge again the magnitude between the releasable power value of the target charging gun and the maximum receivable value of the first to-be-allocated charging gun, and allocate power to the first to-be-allocated charging gun according to the judgment result; the specific process thereof may refer to step S313, and details are not repeated here.

In some embodiments, after step S313, the method further includes:
S314 Allocate power to the to-be-allocated charging pile according to the releasable power value. The method specifically includes:
S3141 Judge whether there is the releasable power value in the target charging pile.

After the target charging pile allocates power to all its to-be-allocated charging guns, it is still possible that the issued power of the target charging gun has not yet reached the reported power, requiring further release of additional power. Specifically, the target charging pile still has a releasable power value, that is, the releasable power value is greater than 0; therefore, it is necessary to further judge whether the releasable power value is 0; if it is not 0, the following step S3142 is performed; if it is 0, the following step S3145 is performed.

S3142 When there is the releasable power value in the target charging pile, determine a group including the target charging pile as a target group.

S3143 Determine the charging pile in the to-be-received state in the target group as the to-be-allocated charging pile.

Due to the structure of the power adjustment system, the algorithm difficulty and loss of power distribution among charging piles belonging to the same group are both superior to those of power distribution among charging piles in different groups. Therefore, when there is a releasable power value in the target charging pile, the group containing the target charging pile is determined as the target group, and the charging piles in the same target group that are in the to-be-received state are determined as to-be-allocated charging piles.

Specifically, it is judged whether the issued power of each charging pile in the target group has reached the power upper limit of the charging pile; if so, it is determined that the charging pile is not a to-be-allocated charging pile; if not, it is determined that the charging pile is the to-be-allocated charging pile.

S3144 Allocate power to the to-be-allocated charging pile according to the releasable power value.

For the charging gun of the to-be-allocated charging pile, power is allocated to the charging gun according to the releasable power value; the specific process can refer to steps S312 and S313, which will not be repeated here.

S3145 When the target charging pile does not have a releasable power value, end step S310.

When there is no releasable power value in the target charging pile, it is indicated that the issued power of the target charging gun has been adjusted to the reported power, and the target charging pile has completed the power release operation, so the power release operation step can be ended.

In some embodiments, after step S3144 the method further includes:
S315 Allocate power to the to-be-allocated group according to the releasable power value. The method specifically includes:
S3151 Judge whether there is the releasable power value in the target group.

After the target group allocates power to all its to-be-allocated charging piles, it is still possible that the issued power of the target charging gun has not yet reached the reported power, requiring further release of additional power. Specifically, the target group still has a releasable power value, that is, the releasable power value is greater than 0; therefore, it is necessary to further judge whether the releasable power value is 0; if it is not 0, the following step S3152 is performed; if it is 0, the following step S3154 is performed.

S3152 When there is the releasable power value in the target group, determine other groups in the to-be-received state as to-be-allocated groups.

Specifically, it is judged whether the overall issued power of groups other than the target group has reached the power upper limit of the group; if so, it is determined that the group is not a to-be-allocated group; if not, it is determined that the group is a to-be-allocated group.

S3153 Allocate power to the to-be-allocated group according to the releasable power value.

For the charging piles in the to-be-allocated group, refer to step S3143 to determine the to-be-allocated charging piles in the to-be-allocated group, power is allocated to the charging guns in the to-be-allocated charging piles according to the releasable power value; the specific process can refer to steps S312 and S313, and will not be repeated here.

It should be noted that if after step S3153, the target charging gun still has a releasable power value, that is, the releasable power value is greater than 0, the final issued power of the target charging gun after releasing power in step S310 is the issued power minus the allocated power value, or it can be calculated according to the issued power being the reported power plus the unallocated power.

S3154 When there is no releasable power value in the target group, end step S310.

When there is no releasable power value in the target group, it is indicated that the issued power of the target charging gun has been adjusted to the reported power, and the target group has completed the power release operation, so the power release operation step can be ended.

Please refer to FIG. 3 again. Next, we will continue to introduce another step S320 relative to S310, which follows S301.

S320 If less than, control the target charging pile to perform a power recovery operation on the target charging gun. Specifically, step S320 specifically includes:
S321 Calculate a receivable power value of the target charging gun according to the issued power and the reported power.

The purpose of performing a power recovery operation on the target charging gun is to put the target charging gun in a normal working state, specifically, the final reported power of the target charging gun is the same as the adjusted issued power, or the deviation between the two is within an acceptable fluctuation range.

It can thus be determined that, in order to increase the issued power value to the reported power value, the receivable power value of the target charging gun is the result of subtracting the issued power value from the reported power value, i.e., receivable power value = reported power value - issued power value.

In one embodiment, the issued power value is 4 kw, the reported power value is 7 kw, and then the calculated receivable power value is 3 kw.

S322 Determine a charging gun in a to-be-recovered state in the target charging pile as a to-be-recovered charging gun.

When the power of the target charging gun increases, it is indicated that the target charging pile may cause a power overload phenomenon, and it is necessary to reduce the issued power of other charging guns to keep the overall issued power of the target charging pile from exceeding the theoretical upper limit; thus, it is necessary to determine whether the charging guns in the target charging pile other than the target charging gun can reduce their power to offset the increased receivable power value and maintain the normal operation of the target charging pile.

Specifically, in one embodiment, S322 includes the following steps:
S3221 Acquire the issued power and a minimum reserved power value of the charging gun in the target charging pile.
S3222 Judge whether the issued power is greater than the minimum reserved power value.

If the issued power is greater than the minimum reserved power value, proceed to the following step S3223; if the issued power is less than or equal to the minimum reserved power value, proceed to the following step S3224.

S3223 When the issued power is greater than the minimum reserved power value, determine the charging gun as the to-be-recovered charging gun.

When the issued power is greater than the minimum reserved power value, it is indicated that the charging gun has not yet reached the minimum load operation, and the issued power can be further reduced to recover part of the power of the charging gun and provide it to the target charging gun, thus determining the charging gun as a to-be-recovered charging gun.

S3224 When the issued power is less than or equal to the minimum reserved power value, determine that the charging gun is not a to-be-recovered charging gun.

When the issued power is less than or equal to the minimum reserved power value, it is indicated that the charging gun is already in the minimum load working state, or even lower than the minimum load working state. If the issued power of the charging gun continues to be reduced, it will easily cause the charging gun to stop working directly or perform ineffective work; therefore, it is necessary to determine that the charging gun is not a to-be-recovered charging gun.

In another embodiment, S322 includes the following steps:
S3225 Acquire the issued power and the reported power of the charging gun in the target charging pile.
S3226 Judge whether a difference between the issued power and the reported power is greater than a preset threshold.

When the difference between the issued power and the reported power is greater than a preset threshold, proceed to the following step S3227; when the difference between the issued power and the reported power is less than or equal to the preset threshold, proceed to the following step S3228.

S3227 When the difference between the issued power and the reported power is greater than the preset threshold, determine the charging gun as the to-be-recovered charging gun.

When the difference between the issued power and the reported power is greater than the preset threshold, it is indicated that the charging gun is in a normal working state, or the charging gun falls into the category of abnormally high issued power, and its issued power can be subjected to recovery adjustment; thus, the charging gun is determined as a to-be-recovered charging gun.

In one embodiment, the issued power of the charging gun is 6 kw, the reported power is 5 kw, the deviation is +1 kw, which is greater than the threshold value of 0, and the charging gun is in a normal working state, so it is determined that the charging gun is a to-be-recovered charging gun.

In another embodiment, the issued power of the charging gun is 9 kw, the reported power is 5 kw, with a deviation of +4 kw, which is greater than the threshold value of 0. Although the charging gun is not in a normal working state but belongs to an abnormally high issued power, it can still be determined that the charging gun is a to-be-recovered charging gun.

In another embodiment, the issued power of the charging gun is 2 kw, the reported power is 5 kw, with a deviation of -2 kw, which is less than the threshold value 0, the charging gun has abnormally low issued power, and it is determined that the charging gun is not a to-be-recovered charging gun.

S3228 When the difference between the issued power and the reported power is less than or equal to the preset threshold, determine that the charging gun is not a to-be-recovered charging gun.

When the difference between the issued power and the reported power is less than or equal to the preset threshold, it is indicated that this charging gun also belongs to the type of abnormally low issued power, and it is necessary to increase the issued power of this charging gun rather than letting this charging gun continue to reduce the issued power to recover power for the target charging gun; therefore, it is determined that this charging gun is not a to-be-recovered charging gun.

It should be noted that the methods for determining the to-be-recovered charging gun in the above two embodiments can be used alone or in combination with each other, and a person skilled in the art can adaptively adjust them as needed.

S323 Recover power for the to-be-recovered charging gun according to the receivable power value.

Specifically, in one embodiment, S323 includes the following steps:
S3231 Determine the priority identifier of the to-be-recovered charging gun.

Specifically, each to-be-recovered charging gun has a priority identifier, and as the charging status corresponding to the charging gun changes, etc., the priority identifier of the to-be-recovered charging gun may change compared to the start of power adjustment, so it is necessary to re-determine the priority identifier of the to-be-recovered charging gun.

S3232 Determine a power recovery sequence according to the priority identifier.

Each priority identifier has a different priority when recovering power, thus, all to-be-recovered charging guns can be sorted according to the priority identifier to obtain the power recovery sequence.

In specific embodiments, the priority identifier includes 4 levels, corresponding to users with paused charging, users with priority charging, VIP users, and ordinary users respectively. In the power recovery sequence, first the charging guns corresponding to users who have paused charging are recovered, then the charging guns corresponding to VIP users are recovered, and finally the charging guns corresponding to users with priority charging are recovered; the charging guns corresponding to users who have paused charging do not participate in power recovery because their charging power has been completely reduced to 0.

It should be noted that the level of the priority identifier is not limited to the 4 levels described in the above embodiments, the corresponding users can be increased, decreased or changed compared with the 4 types of users in the above embodiments, the corresponding priority is also not limited to the embodiments, and a person skilled in the art can make adaptive modifications in practical inventions.

S3233 According to the power recovery sequence, sequentially recover power for each to-be-recovered charging gun.

Specifically, step S3233 includes:
S32331 Determine the issued power and the minimum reserved power value of the to-be-recovered charging gun.
S32332 Determine a maximum recoverable value of the to-be-recovered charging gun according to the issued power and the minimum reserved power value.

The minimum issued power of the to-be-recovered charging gun during normal operation is the minimum reserved power value, that is, the minimum issued power of the to-be-recovered charging gun after power reduction; thus, it can be determined that the maximum recoverable value of the to-be-recovered charging gun is the result of the issued power value minus the minimum reserved power value, that is, maximum recoverable value = issued power value - minimum reserved power value.

S32333 According to the maximum recoverable value or the receivable power value, recover power for the to-be-recovered charging gun.

Since both the maximum recoverable value and the receivable power value exert a constraint on the recovered power, that is, the allocated reduced power for the to-be-recovered charging gun cannot exceed the maximum recoverable value to prevent the issued power of the charging gun from being lower than the minimum reserved power value, resulting in the charging gun stopping working. Meanwhile, the recovered reduced power cannot exceed the receivable power value; otherwise, the target charging gun receives excessive power, resulting in the target charging pile generating power redundancy and reducing the overall charging efficiency.

Thus, to solve the above problem, S32333 further includes the following steps:
S323331 Judge whether the maximum recoverable value is greater than the receivable power value.
S323332 If greater than or equal to, reduce the issued power of the to-be-recovered charging gun according to the receivable power value.

When the maximum recoverable value is greater than or equal to the receivable power value, it is indicated that the to-be-recovered charging gun is sufficient to fully release the receivable power value of the target charging gun; at this time, the issued power of the to-be-recovered charging gun is reduced by the receivable power value, and the issued power of the target charging gun is increased to reach the reported power value.

S323333 If less than, reduce the issued power of the to-be-recovered charging gun according to the maximum recoverable value.

When the maximum recoverable value is less than the receivable power value, it is indicated that even if the issued power of the to-be-recovered charging gun is reduced to the minimum reserved power value, it still cannot fully provide all the receivable power values required by the target charging gun. At this time, the issued power of the to-be-recovered charging gun is reduced with the maximum recoverable value, and the issued power of the to-be-recovered charging gun is reduced to reach the minimum reserved power value.

S323334 Recalculate the receivable power value of the target charging gun according to the maximum recoverable value and the receivable power value.

When reducing the issued power of the to-be-recovered charging gun by the maximum recoverable value, it is indicated that the to-be-recovered charging gun cannot fully provide the receivable power value required by the target charging gun; therefore, it is necessary to recover power for another to-be-recovered charging gun, and thus it is necessary to recalculate the receivable power value of the target charging gun.

Specifically, the receivable power value of the target charging gun at this time is the original receivable power value minus the maximum receivable value of the recovered to-be-recovered charging gun, that is, recalculated receivable power value = original receivable power value - maximum recoverable value.

Specifically, in the embodiment, the first to-be-recovered charging gun is defined as a charging gun among the to-be-recovered charging guns whose power has not been recovered, and the second to-be-recovered charging gun is defined as a charging gun among the to-be-recovered charging guns whose power has been recovered. The original receivable power value of the target charging gun is 4 kw, the maximum recovered power value of the second to-be-allocated charging gun is 1 kw, so the recalculated receivable power value is 3 kw; for the first to-be-recovered charging gun, the recalculated 3 kw is used as the receivable power value for subsequent calculations and judgments.

It should be noted that there may be multiple first to-be-recovered charging guns, and the specific number is not limited. For example, in the present embodiment, the maximum recovered power values of the two first to-be-recovered charging guns are 2 kw and 1 kw respectively, and then the recalculated receivable power value is 1 kw.

S323335 Recover power for a first to-be-recovered charging gun according to the recalculated receivable power value.

Specifically, in this step, it is necessary to judge again the magnitude between the receivable power value of the target charging gun and the maximum recoverable value of the first to-be-recovered charging gun, and allocate power to the first to-be-recovered charging gun according to the judgment result; the specific process thereof can refer to step S323, and will not be repeated here.

In some embodiments, after step S323, the method further includes:
S324 Recover power for the to-be-recovered charging pile according to the receivable power value. The method specifically includes:
S3241 Judge whether there is the receivable power value in the target charging pile.

After the target charging pile recovers power from all its to-be-recovered charging guns, at this point, it is still possible that the issued power of the target charging gun has not yet reached the reported power, requiring further recovering power. Specifically, the target charging pile still has a receivable power value, that is, the receivable power value is greater than 0; therefore, it is necessary to further judge whether the receivable power value is 0; if it is not 0, the following step S3242 is executed; if it is 0, the following step S3245 is executed.

S3242 When there is the receivable power value in the target charging pile, determine a group including the target charging pile as a target group.

S3243 Determine a charging pile in a to-be-recovered state in the target group as a to-be-recovered charging pile.

Due to the structure of the power adjustment system, the algorithm difficulty and loss of power recovery among charging piles belonging to the same group are both superior to those of power recovery among charging piles in different groups. Therefore, when there is a receivable power value in the target charging pile, the group containing the target charging pile is determined as the target group, and the charging piles in the same target group that are in the to-be-recovered state are determined as to-be-recovered charging piles.

Specifically, it is judged whether the issued power of each charging pile in the target group has reached the minimum reserved power of the charging pile; if so, it is determined that the charging pile is not a to-be-recovered charging pile; if not, it is determined that the charging pile is a to-be-recovered charging pile.

S3244 Recover power for the to-be-recovered charging pile according to the receivable power value.

For the charging gun of the to-be-recovered charging pile, power is recovered for the charging gun according to the receivable power value; the specific process can refer to steps S322 and S323, which will not be repeated here.

S3245 When there is no receivable power value for the target charging pile, end step S320.

When there is no receivable power value in the target charging pile, it is indicated that the issued power of the target charging gun has been adjusted to the reported power, and the target charging pile has completed the power recovery operation, so the power recovery operation step can be ended.

In some embodiments, after step S324, the method further includes:
S325 Recover power for the to-be-recovered group according to the receivable power value. The method specifically includes:
S3251 Judge whether the target group has a receivable power value.

After the target group recovers power from all its to-be-recovered charging piles, at this point, it is still possible that the issued power of the target charging gun has not yet reached the reported power, requiring further receiving power. Specifically, the target group still has a receivable power value, that is, the receivable power value is greater than 0; therefore, it is necessary to further judge whether the receivable power value is 0; if it is not 0, the following step S3252 is executed; if it is 0, the following step S3254 is executed.

S3252 When there is the receivable power value in the target group, determining other groups in the to-be-recovered state as to-be-recovered groups.

Specifically, it is judged whether the overall issued power of groups other than the target group has reached the minimum reserved power value of the group; if so, it is determined that the group is not a to-be-allocated group; if not, it is determined that the group is a to-be-allocated group.

S3253 Recover power for the to-be-recovered group according to the receivable power value.

For the charging piles of the to-be-recovered group, refer to step S3243 to determine the to-be-recovered charging piles in the to-be-recovered group, and then power is recovered for the charging guns in the to-be-recovered charging piles according to the receivable power value. The specific process can refer to steps S322 and S323, which will not be repeated here.

It should be noted that if after step S3253, the target charging gun still has a receivable power value, that is, the receivable power value is greater than 0, the final issued power of the target charging gun after power release in step S320 is the issued power plus the recovered power value, or can be calculated as the reported power minus the unrecovered power.

It should also be noted that if after step S3253, the final issued power of the target charging gun is still lower than the reported power and the deviation between the two is greater than the preset threshold, making the target charging gun still belong to the type with abnormally high issued power, in order to avoid overload of the target charging pile, adjust the priority identifier corresponding to the target charging gun to the suspended charging user level, reduce the final issued power of the target charging gun to 0, and wait for maintenance personnel to inspect and repair.

S3254 When there is no receivable power value in the target group, end step S320.

When there is no receivable power value in the target group, it is indicated that the issued power of the target charging gun has been adjusted to the reported power, and the target group has completed the power recovery operation, so the power recovery operation step can be ended.

In some embodiments, before step S21, the method further includes:
S201 Acquire user information corresponding to the target charging gun.

Specifically, the user information includes the type of a user, and the type of the user is, for example, one of a VVIP user, a VIP user, ordinary user, a blacklist user, and a whitelist user.

S202 Generate the priority identifier for the target charging gun according to the user information.

The priority identifier is used to determine the issued power of the target charging gun and an order of power recovery. Specifically, when determining the issued power, the issued power is allocated in sequence according to the order of the VVIP user, the VIP user, and the ordinary user; when recovering power, the power is recovered in the order of the ordinary user, the VIP user, and the VVIP user.

In some other embodiments, before step S21, the method further includes:
S203 Acquire user information corresponding to the target charging gun.

Specifically, the user information includes scheduled charging time of the user.

In some embodiments, the user can send the scheduled charging time to the power adjustment system through an intelligent terminal such as a mobile phone or a laptop computer. After acquiring the scheduled charging time, the power adjustment system adjusts the issued power of the target charging gun corresponding to the user according to the scheduled charging time, so that the user's device to be charged can complete the charging task within the scheduled charging time.

S204 Acquire an estimated charging time of the target charging gun.

The power adjustment system generates the estimated charging time of the target charging gun according to the reported power collected by the target charging gun in real time, combined with the charging task or charging progress of the device to be charged.

In one embodiment, the reported power of the target charging gun is 5 kw, the charging task is to charge the battery from 20% power to 98%, and the estimated charging time calculated according to the preset charging curve is 40 min.

S205 Generate the priority identifier for the target charging gun according to the scheduled charging time and the estimated charging time.

In one embodiment, the scheduled charging time set by the user is 30 min, and the estimated charging time calculated by the power adjustment system is 40 min, so the priority identifier of the target charging gun corresponding to the user is set to the priority charging user level.

In another embodiment, the scheduled charging time set by the user is 30 min, and the estimated charging time calculated by the power adjustment system is 40 min, so the priority identifier of the target charging gun corresponding to the user is set to the ordinary charging user level.

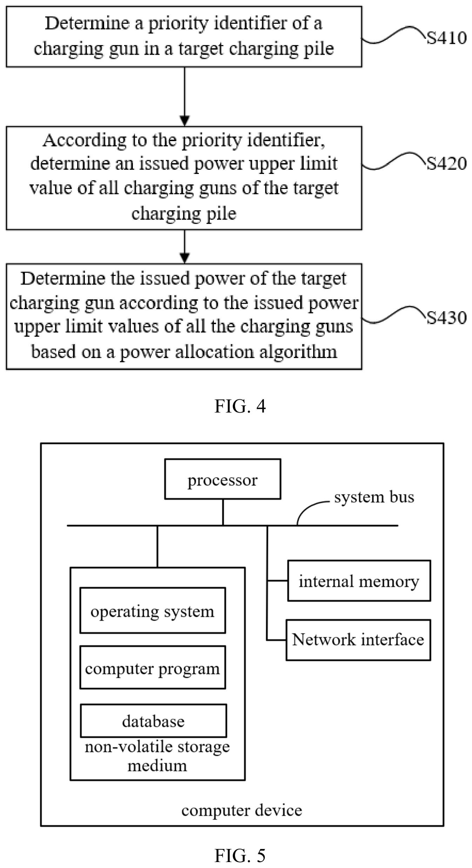

Please refer to FIG. 4, FIG. 4 is a schematic flowchart of determining an issued power of a target charging gun according to a priority identifier according to an embodiment of the present invention.

S410 Determine a priority identifier of a charging gun in a target charging pile.

S420 According to the priority identifier, determine an issued power upper limit value of all charging guns of the target charging pile.

Specifically, step S420 includes:
S421 Determine the number of charging guns corresponding to each priority identifier.

In some embodiments, the target charging pile includes 4 charging guns, corresponding to 4 user types with priority identifiers: a priority charging user, a suspended charging user, a VIP user, and an ordinary user. Thus, it can be determined that the quantity of the charging guns corresponding to respective priority identifiers is 1.

S422 Sort the charging guns according to the priority identifier to obtain a power allocation sequence.

In some embodiments, the power allocation sequence first determines the issued power upper limit value for the suspended charging users, secondly determines the issued power upper limit value for the charging users with priority, then determines the issued power upper limit value for the VIP users, and finally determines the issued power upper limit value for the ordinary users.

It can be understood that in some other embodiments, the power allocation sequence corresponding to the priority identifier can be changed in order, for example, first determine the issued power upper limit value for VIP users, and then determine the issued power upper limit value for charging users with priority.

S423 Sequentially determine the issued power upper limit value of each charging gun according to the power allocation sequence and the priority identifier.

In some embodiments, the power upper limit of the target charging pile is 20 kw, the minimum reserved power of each charging gun is 3 kw, the power upper limit value of the charging gun is 10 kw, and the target charging pile includes 4 charging guns, corresponding to the priority charging user, the suspended charging user, the VIP user, and the ordinary user.

According to the power allocation sequence, first the issued power upper limit value of the charging gun for the suspended charging user is determined as 0. Secondly, calculation is performed according to the formula: issued power upper limit value for charging users with priority = (charging pile power upper limit - minimum reserved power value x quantity of charging guns for users with low priority identifiers)/(quantity of charging guns for charging users with priority), that is, (20-3×2)/1=14 kw.

It should be noted that the quantity of the charging guns with low priority identifiers does not include the quantity of the charging guns for suspended charging users.

It should also be noted that since the value 14 kw is greater than the power upper limit value 10 kw of the charging gun, it is calculated according to the power upper limit value 10 kw of the charging gun.

Further, since there are charging users with priority in the power allocation sequence, the priority identifier of VIP users is reduced to the same level as that of the ordinary users, that is, both the VIP users and the ordinary users calculate the issued power upper limit value according to the minimum reserved power value.

In other embodiments, even if there are charging users with priority in the power allocation sequence, the priority identifier of the VIP users is still higher than that of the ordinary users, and the issued power upper limit value for the VIP users is calculated according to the formula: (remaining power upper limit of charging pile - minimum reserved power value x quantity of the charging guns for the users with low priority identifiers)/(quantity of the charging guns for the VIP users), that is, ((20-14)-3×1)/1=3 kw.

Finally, if there are no charging users with priority and VIP users in the power allocation sequence, the issued power upper limit value for the ordinary users = the charging pile power upper limit/quantity of the charging guns for the ordinary users; if there are, the issued power upper limit value of the charging guns corresponding to ordinary users is directly set according to the minimum reserved power value.

S430 Determine the issued power of the target charging gun according to the issued power upper limit values of all the charging guns based on a power allocation algorithm.

The power allocation algorithm includes an average allocation algorithm, a weighted average algorithm, and a first-in-first-out algorithm, and the selection of a specific algorithm is determined by parameters.

Specifically, in the process of executing the power allocation algorithm, the issued power of each charging gun of the target charging pile is allocated and determined in sequence according to the priority identifier. For example, first allocation is performed to the charging guns of the charging users with priority, then to the charging guns of the VIP users, and finally to the charging guns of the ordinary users.

In some embodiments, the target charging pile first allocates power to all charging guns corresponding to charging users with priority with priority identifiers based on the power allocation algorithm. After determining the issued power of the charging guns for the charging users with priority, the target charging pile allocates power to the VIP users based on the power allocation algorithm according to the remaining allocable power value. The remaining allocable power value is the power upper limit value of the target charging pile minus the total issued power value allocated to the charging users with priority. If the remaining allocable power value is 0, it is directly allocated to the VIP users according to the minimum reserved power value to determine the issued power value.

It can be understood that in the present embodiment, the issued power logic of the charging guns corresponding to the ordinary users is the same as that of the VIP users, and the only difference is that the priority identifier of the ordinary users is lower than that of the VIP users, so details are not described herein.

It can be seen that the following technical effects can be achieved through the technical solution of the present invention: first, the priority identifier of the target charging gun is determined, where the target charging pile includes multiple charging guns including the target charging gun; second, the issued power of the target charging gun is determined according to the priority identifier; then, the reported power of the target charging gun is acquired; finally, the target charging pile is controlled to perform a power release operation or a power recovery operation on the target charging gun according to the issued power and the reported power. Therefore, a real-time dynamic adjustment of the power of the target charging gun is realized. By combining the priority identifier with real-time monitoring of the charging guns, while the issued power of the target charging gun is determined according to the priority identifier, power release or power recovery is performed in response to the target charging gun which is monitored to be abnormal, thereby allowing the target charging gun to operate normally while achieving the overall charging efficiency and stability of the target charging pile.

Embodiments of the present invention also provide a computer-readable storage medium storing a computer program including program commands which, when executed by a computer, cause the computer to perform the method according to the preceding embodiments.

An embodiment of the present invention further provides a power adjustment system based on charging piles, which includes a charging management device and a charging station, where the charging station includes at least one charging group, each charging group includes at least two charging piles, the charging management device is communicatively connected to the charging station, and the charging management device is configured to execute the power adjustment method based on charging piles according to the foregoing embodiment.

An embodiment of the present invention further provides an electronic device, including a memory, a processor, and a computer program stored in the memory and executable on the processor, where the processor implements the power adjustment method based on charging piles according to the foregoing embodiment when executing the computer program.

In one embodiment, a computer device is provided, which may be a server, the internal structure of which may be as shown in FIG. 5. The computer device includes a processor, a memory, a network interface, and a database connected through a system bus. The processor of the computer device is configured to provide computing and control capabilities. The memory of the computer device includes a non-transitory storage medium and an internal memory. The non-transitory storage medium stores an operating system, a computer program, and a database. The internal memory provides an environment for the operation of the operating system and the computer program in the non-transitory storage medium. The database of the computer device is used to store data to be saved in the power adjustment method based on charging piles. The network interface of the computer device is used to communicate with an external terminal through a network connection. The computer program, when executed by the processor, implements a power adjustment method based on charging piles.

It will be understood by a person skilled in the art that all or part of the flows of the methods of the embodiments described above may be implemented by hardware instructions of a computer program, which may be stored in a non-transitory computer-readable storage medium, and when executed, may include the flows of the embodiments of the methods described above. Any reference to memory, storage, database or other media used in the embodiments provided in the present invention may include non-transitory and/or volatile memories. Non-transitory memory may include read-only memory (ROM), programmable ROM (PROM), electrically programmable ROM (EPROM), electrically erasable programmable ROM (EEPROM), or flash memory. Volatile memory may include random access memory (RAM) or external cache memory. By way of illustration and not limitation, RAM is available in various forms such as static RAM (SRAM), dynamic RAM (DRAM), synchronous DRAM (SDRAM), double data rate SDRAM (DDRSDRAM), enhanced SDRAM (ESDRAM), Synchlink DRAM (SLDRAM), Rambus direct RAM (RDRAM), direct memory bus dynamic RAM (DRDRAM), and memory bus dynamic RAM (RDRAM), etc.

It will be clear to a person skilled in the art that, for convenience and conciseness of description, only the above-mentioned division of functional units and modules is exemplified, and in practical inventions, the above-mentioned allocation of functions can be performed by different functional units and modules, i.e. dividing the internal structure of the apparatus into different functional units or modules, as required, to perform all or part of the functions described above.

The above embodiments serve merely to illustrate the technical solutions of the present invention, rather than to restrict them. Although the present invention has been described in detail with reference to the preceding embodiments, a person skilled in the art should understand that he or she may still modify the technical solutions recorded in each of the preceding embodiments, or make equivalent replacement of some of the technical features therein. However, such modifications or replacements do not cause the essence of the corresponding technical solutions to depart from the spirit and scope of the technical solutions of each embodiment of the present invention, and all such modifications or replacements shall be included within the protection scope of the present invention.

## Claims

1. A power adjustment method based on charging piles, **characterized by** comprising:
determining a priority identifier of a target charging gun, wherein a target charging pile includes multiple charging guns including the target charging gun;
on the basis of the priority identifier, determining an issued power of the target charging gun;
acquiring a reported power of the target charging gun; and
on the basis of the issued power and the reported power, controlling the target charging pile to execute a power release operation or a power recovery operation on the target charging gun.

2. The method according to claim 1, **characterized in that** the on the basis of the issued power and the reported power, controlling the target charging pile to execute a power release operation or a power recovery operation on the target charging gun comprises:
judging whether the issued power is greater than the reported power;
if greater than, controlling the target charging pile to perform the power release operation on the target charging gun; and
if less than, controlling the target charging pile to perform the power recovery operation on the target charging gun.

3. The method according to claim 2, **characterized in that** the controlling the target charging pile to perform a power release operation on the target charging gun comprises:
calculating a releasable power value of the target charging gun according to the issued power and the reported power;
determining a charging gun in a to-be-received state in the target charging pile as a to-be-allocated charging gun; and
allocating power to the to-be-allocated charging gun according to the releasable power value.

4. The method according to claim 3, **characterized in that** the determining a charging gun in a to-be-received state in the target charging pile as a to-be-allocated charging gun comprises:
acquiring the issued power and the power upper limit value of the charging gun in the target charging pile;
judging whether the issued power is less than the power upper limit value; and
when the issued power is less than the power upper limit value, determining the charging gun as the to-be-allocated charging gun.

5. The method according to claim 3, **characterized in that** the determining a charging gun in a to-be-received state in the target charging pile as a to-be-allocated charging gun comprises:
acquiring the issued power and the reported power of the charging gun in the target charging pile;
judging whether a difference between the issued power and the reported power is less than a preset threshold; and
when the difference between the issued power and the reported power is less than the preset threshold, determining the charging gun as the to-be-allocated charging gun.

6. The method according to any one of claims 3 to 5, **characterized in that** the allocating power to the to-be-allocated charging gun according to the releasable power value comprises:
determining the issued power and the power upper limit value of the to-be-allocated charging gun;
determining a maximum receivable value of the to-be-allocated charging gun according to the issued power and the power upper limit value; and
allocating power to the to-be-allocated charging gun according to the maximum receivable value or the releasable power value.

7. The method according to claim 6, **characterized in that** the allocating power to the to-be-allocated charging gun according to the maximum receivable value or the releasable power value comprises:
judging whether the maximum receivable value is less than the releasable power value;
if less than, increasing the issued power of the to-be-allocated charging gun according to the maximum receivable value; and
if greater than or equal to, increasing the issued power of the to-be-allocated charging gun according to the releasable power value.

8. The method according to claim 7, **characterized by** further comprising, after increasing the issued power of the to-be-allocated charging gun according to the maximum receivable value:
recalculating the releasable power value of the target charging gun according to the maximum receivable value and the releasable power value; and
allocating power to a first to-be-allocated charging gun according to the recalculated releasable power value, wherein the first to-be-allocated charging gun is the charging gun among the to-be-allocated charging guns that has not been allocated power yet.

9. The method according to any one of claims 3 to 5, **characterized by** further comprising, after allocating power to the to-be-allocated charging gun according to the releasable power value:
judging whether there is the releasable power value in the target charging pile;
when there is the releasable power value in the target charging pile, determining a group including the target charging pile as a target group;
determining the charging pile in the to-be-received state in the target group as the to-be-allocated charging pile; and
allocating power to the to-be-allocated charging pile according to the releasable power value.

10. The method according to claim 9, **characterized by** further comprising, after allocating power to the to-be-allocated charging pile according to the releasable power value:
judging whether there is the releasable power value in the target group;
when there is the releasable power value in the target group, determining other groups in the to-be-received state as to-be-allocated groups; and
allocating power to the to-be-allocated groups according to the releasable power value.

11. The method according to claim 2, **characterized in that** the controlling the target charging pile to perform a power recovery operation on the target charging gun comprises:
calculating a receivable power value of the target charging gun according to the issued power and the reported power;
determining a charging gun in a to-be-recovered state in the target charging pile as a to-be-recovered charging gun; and
recovering power for the to-be-recovered charging gun according to the receivable power value.

12. The method according to claim 11, **characterized in that** the determining a charging gun in a to-be-recovered state in the target charging pile as a to-be-recovered charging gun comprises:
acquiring the issued power and a minimum reserved power value of the charging gun in the target charging pile;
judging whether the issued power is greater than the minimum reserved power value; and
when the issued power is greater than the minimum reserved power value, determining the charging gun as the to-be-recovered charging gun.

13. The method according to claim 11, **characterized in that** the determining a charging gun in a to-be-received state in the target charging pile as a to-be-allocated charging gun comprises:
acquiring the issued power and the reported power of the charging gun in the target charging pile;
judging whether a difference between the issued power and the reported power is greater than a preset threshold; and
when the difference between the issued power and the reported power is greater than the preset threshold, determining the charging gun as the to-be-recovered charging gun.

14. The method according to any one of claims 11 to 13, **characterized in that** the recovering power for the to-be-recovered charging gun according to the receivable power value comprises:
determining the priority identifier of the to-be-recovered charging gun;
determining a power recovery sequence according to the priority identifier; and
recovering power for each of the to-be-recovered charging guns in sequence according to the power recovery sequence.

15. The method according to claim 14, **characterized in that** the recovering power for each of the to-be-recovered charging guns in sequence according to the power recovery sequence comprises:
determining the issued power and the minimum reserved power value of the to-be-recovered charging gun;
determining a maximum recoverable value of the to-be-recovered charging gun according to the issued power and the minimum reserved power value; and
recovering power for the to-be-recovered charging gun according to the maximum recoverable value or the receivable power value.

16. The method according to claim 15, **characterized in that** the recovering power for the to-be-recovered charging gun according to the maximum recoverable value or the receivable power value comprises:
judging whether the maximum recoverable value is greater than the receivable power value;
if greater than or equal to, reducing the issued power of the to-be-recovered charging gun according to the receivable power value; and
if less than, reducing the issued power of the to-be-recovered charging gun according to the maximum recoverable value.

17. The method according to claim 16, **characterized by** further comprising, after reducing the issued power of the to-be-recovered charging gun according to the maximum recoverable value:
recalculating the receivable power value of the target charging gun according to the maximum recoverable value and the receivable power value; and
recovering power for a first to-be-recovered charging gun according to the recalculated receivable power value, wherein the first to-be-recovered charging gun is the charging gun in the to-be-recovered charging guns that has not been recovered power yet.

18. The method according to any one of claims 11 to 13, **characterized by** further comprising, after allocating power to the to-be-recovered charging gun according to the receivable power value:
judging whether there is the receivable power value in the target charging pile;
when there is the receivable power value in the target charging pile, determining a group including the target charging pile as a target group;
determining a charging pile in a to-be-recovered state in the target group as a to-be-recovered charging pile; and
recovering power for the to-be-recovered charging pile according to the receivable power value.

19. The method according to claim 18, **characterized by** further comprising, after recovering power for the to-be-recovered charging pile according to the receivable power value:
judging whether there is the receivable power value in the target group;
when there is the receivable power value in the target group, determining other groups in the to-be-recovered state as to-be-recovered groups; and
recovering power for the to-be-recovered groups according to the receivable power value.

20. The method according to any one of claims 1 to 5 or 11 to 13, **characterized by** further comprising, before determining a priority identifier of a target charging gun:
acquiring user information corresponding to the target charging gun, wherein the user information comprises a user type; and
generating the priority identifier for the target charging gun according to the user information.

21. The method according to any one of claims 1 to 5 or 11 to 13, **characterized by** further comprising, before determining a priority identifier of a target charging gun:
acquiring user information corresponding to the target charging gun, wherein the user information comprises a scheduled charging time of a user;
acquiring an estimated charging time of the target charging gun; and
generating the priority identifier for the target charging gun according to the scheduled charging time and the estimated charging time.

22. The method according to any one of claims 1 to 5 or 11 to 13, **characterized in that** the on the basis of the priority identifier, determining an issued power of the target charging gun specifically comprises:
determining the priority identifier of the charging gun in the target charging pile;
determining the issued power upper limit value of all the charging guns of the target charging pile according to the priority identifier; and
determining the issued power of the target charging gun according to the issued power upper limit values of all the charging guns based on a power allocation algorithm.

23. The method according to claim 22, **characterized in that** the determining the issued power upper limit value of all the charging guns of the target charging pile according to the priority identifier comprises:
determining the number of charging guns corresponding to each priority identifier;
sorting the charging guns according to the priority identifier to obtain a power allocation sequence; and
sequentially determining the issued power upper limit value of each charging gun according to the power allocation sequence and the priority identifier.

24. An electronic device, **characterized by** comprising a memory, a processor and a computer program stored in the memory and capable of running on the processor, wherein the processor, when executing the computer program, implements a method according to any one of claims 1 to 23.

25. A storage medium, storing a computer program, **characterized in that** the computer program, when executed by a processor, implements the method according to any one of claims 1 to 23.

26. A power adjustment system based on charging piles, **characterized by** comprising a charging management device and a charging station, wherein the charging station comprises at least one charging group, each charging group comprises at least two charging piles, the charging management device is communicatively connected to the charging station, and the charging management device is configured to execute the method according to any one of claims 1 to 23.
